# EUROPEAN PATENT SPECIFICATION

(11) **EP 3 489 891 B1**
(45) Date of publication and mention of the grant of the patent: **11.05.2022**
(21) Application number: 17849107.2
(22) Date of filing: 07.09.2017
(51) Int. Cl.: G06T 3/00, G06T 3/60, H04N 19/119

(54) **METHOD AND DEVICE FOR PROCESSING THREE-DIMENSIONAL IMAGE DATA**
VERFAHREN UND VORRICHTUNG ZUR VERARBEITUNG VON DREIDIMENSIONALEN BILDDATEN
PROCÉDÉ ET DISPOSITIF DE TRAITEMENT DE DONNÉES D'IMAGES TRIDIMENSIONNELLES

(30) Priority: 09.09.2016 US 201662385446 P; 06.09.2017 KR 20170114060
(43) Date of publication of application: 29.05.2019
(73) Proprietor: Samsung Electronics Co., Ltd., Suwon-si, Gyeonggi-do 16677 (KR)
(72) Inventor: YIP, Eric, Gyeonggi-do, 16677 (KR); CHOI, Byeong-Doo, Gyeonggi-do, 16677 (KR); SONG, Jae-Yeon, Gyeonggi-do, 16677 (KR)
(74) Representative: Nederlandsch Octrooibureau
(86) International application number: PCT/KR2017/009829
(87) International publication number: WO 2018/048223

(56) References cited:
- EP-A1- 3 419 301
- EP-A1- 3 433 831
- WO-A1-2016/076680
- KR-A- 20020 070 015
- KR-A- 20160 079 357
- US-A1- 2006 257 049
- US-A1- 2015 249 815
- BYEONGDOO CHOI ET AL: "WD on ISO/IEC 23000-20 Omnidirectional Media Application Format", ISO/IEC JTC1/SC29/WG11 N16189, 1 June 2016 (2016-06-01), XP055517901,
- LI JISHENG ET AL: "Novel tile segmentation scheme for omnidirectional video", 2016 IEEE INTERNATIONAL CONFERENCE ON IMAGE PROCESSING (ICIP), IEEE, 19 August 2016 (2016-08-19), pages 370-374, XP033016554, DOI: 10.1109/ICIP.2016.7532381 [retrieved on 2016-08-03]
- CHI-WING FU ET AL: "The Rhombic Dodecahedron Map: An Efficient Scheme for Encoding Panoramic Video", IEEE TRANSACTIONS ON MULTIMEDIA., vol. 11, no. 4, 1 June 2009 (2009-06-01), pages 634-644, XP055531421, US ISSN: 1520-9210, DOI: 10.1109/TMM.2009.2017626

## Description

### [Technical Field]

The present disclosure relates to a method and apparatus for processing a three-dimensional (3D) image.

### [Background Art]

The internet, which is a human-oriented connectivity network where humans generate and consume information, is now evolving into the Internet of Things (IoT) where distributed entities, such as things, exchange and process information. The Internet of Everything (IoE) has also emerged, and is a combination of IoT technology and Big Data processing technology through a connection with a cloud server.

As technology elements such as sensing technology, wired/wireless communication and network infrastructure, service interface technology, and security technology, are in demand for IoT implementation, a sensor network, Machine to Machine (M2M), Machine Type Communication (MTC), and so forth have recently been researched in order to connect various things.

Such an IoT environment may provide intelligent Internet technology (IT) services that create new value for human life by collecting and analyzing data generated among connected things. IoT may be applied to a variety of fields including smart homes, smart buildings, smart cities, smart cars or connected cars, smart grids, health care, smart appliances, advanced medical services, etc., through the convergence and combination between existing IT and various industries. Meanwhile, contents for implementing IoT have evolved, too. That is, with the continuous evolution through standardization and the distribution of black/ white content to color content, high definition (HD), ultra-high definition (UHD), and recent high dynamic range (HDR) content, research on virtual reality (VR) contents that may be reproduced in VR devices such as the Oculus, Samsung Gear VR, etc., is progressing. According to the VR system, a user is monitored and once the user is allowed to provide a feedback input to a content display apparatus or a processing unit by using a kind of controller, then the apparatus or unit processes the input and adjusts content correspondingly, enabling interaction.

Basic components in a VR echo system may include, for example, a head mounted display (HMD), wireless or mobile VR TVs, cave automatic virtual environments (CA VEs), peripheral devices and haptics [other control devices for providing inputs to VR], content capture [camera or video stitching], content studio [games, live, movies, news, and documentaries], industrial application [education, health care, real estate, construction, trips], production tools and services [3D engines, processing power], the App Store [for VR media content], etc.

A three-dimensional (3D) image reproduced in a VR device may be a stereoscopic image such as a spherical shape or a cylindrical shape. The VR device may display a particular region of the 3D image by considering the direction of the user's gaze, etc.

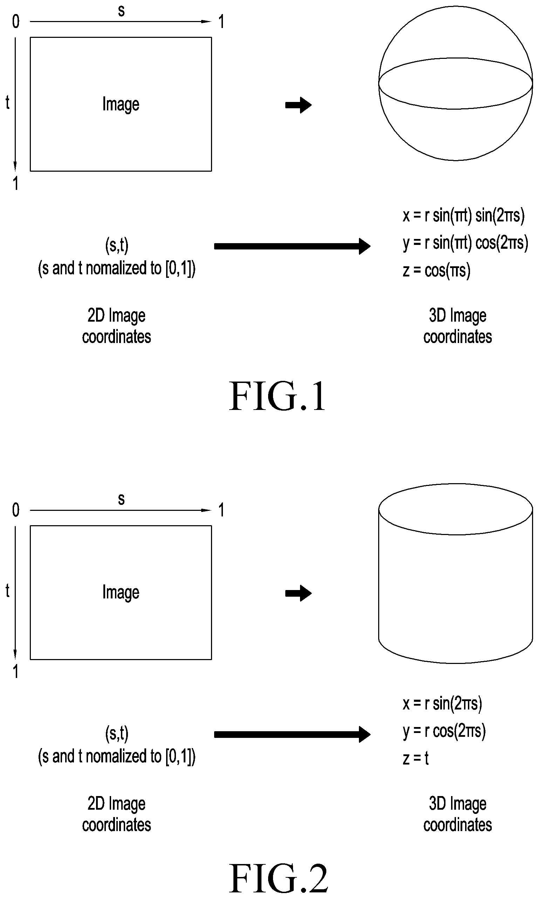

In a system for storing, compressing, and transmitting a 360-degree image (or a 3D image or an omnidirectional image) for VR, multiple images captured using multiple cameras are mapped onto a surface of a 3D model (e.g., a sphere model, a cube model, a cylinder model, etc.), and an HMD device renders and displays a region corresponding to a particular view. In this case, to provide a 3D image to a user located in a remote place (or a remote user), an existing system for compressing/storing/transmitting a 2D image may be used. In order to map (or projecting) the 3D image to the 2D image, for example, equirectangular projection (ERP) may be used. After the 3D image is transformed into a 2D image by using the ERP, the 2D image may be delivered to the remote user by using the existing system for compressing/storing/transmitting the 2D image. The remote user may decode the received 2D image and then reconstruct the 3D image through inverse projection of ERP (or inverse ERP). FIG. 1 illustrates exemplary inverse ERP. Referring to FIG. 1, a rectangular 2D image may be transformed into a spherical 3D image through inverse ERP.

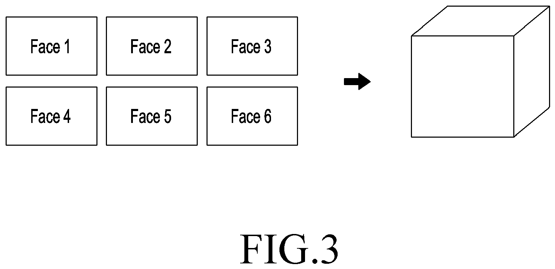

To map the 3D image to the 2D image, cylinder-based projection (or cylindrical projection) or cube-based projection (or cubic projection), as well as ERP, may be used, and other various mapping schemes may also be used. A VR device having received the 3D image that transformed into the 2D image by using cylindrical projection or cubic projection may reconstruct the 3D image through inverse cylindrical projection or inverse cubic projection. FIG. 2 illustrates exemplary inverse cylindrical projection. Referring to FIG. 2, a rectangular 2D image may be transformed into a cylindrical 3D image through inverse cylindrical projection. FIG. 3 illustrates exemplary cubic projection. Referring to FIG. 3, a 2D image generated by cubic projection may include sub-images in the shape of six rectangles (or squares) corresponding to faces of a hexahedron (cube). Through inverse cubic projection, each of the six sub-images corresponds to each face of the hexahedron to reconstruct the 3D image in the shape of the hexahedron.

According to projection methods and methods for inverse projection described with reference to FIGs. 1 through 3, an image in a particular region may be distorted or excessively redundant data regarding a specific region may be generated depending on each projection method. For example, in case of ERP, worse distortion may occur in the upper and lower edges of a 2D image than in the center of the 2D image. Thus, when the upper and lower poles of an image are viewed through the HMD device, the sense of immersion may be degraded due to distortion. In addition, at a pole, data corresponding to a point is linearly up-sampled and is projected into the 2D image, increasing unnecessary data and thus increasing the bitrate for transmitting the 2D image.

Image data projected from the 3D image using EPR, etc. may have a larger amount of data than that of a conventional 2D image. To reduce the burden of data transmission, a method which divides the projected 2D image into multiple tiles and transmits only data regarding tiles of a region corresponding to a current field of view (FoV) may be considered. However, according to this scheme, the degree of distortion caused by projection differs with a tile, such that uniform visual quality may not be guaranteed for a viewport, and redundant data may have to be transmitted. Moreover, data is partitioned, compressed, and transmitted for each tile, causing a blocking artifact.

Various solutions for frame packaging when encoding omnidirectional image data are known from BYEONGDOO CHOI ET AL: "WD on ISO/IEC 23000-20 Omnidirectional Media Application Format", ISO/IEC JTC1/SC29/WG11 N16189, June 2016; LI JISHENG ET AL: "Novel tile segmentation scheme for omnidirectional video", 2016 IEEE INTERNATIONAL CONFERENCE ON IMAGE PROCESSING (ICIP), IEEE, 19 August 2016, pages 370-374; and CHI-WING FU ET AL: "The Rhombic Dodecahedron Map: An Efficient Scheme for Encoding Panoramic Video", IEEE TRANSACTIONS ON MULTIMEDIA., vol. 11, no. 4, 2009, pages 634-644, US ISSN: 1520-9210.

### [Detailed Description of the Invention]

### [Technical Problem]

Image data projected from the 3D image using EPR, etc. may have a larger amount of data than that of a conventional 2D image. To reduce the burden of data transmission, a method which divides the projected 2D image into multiple tiles and transmits only data regarding tiles of a region corresponding to a current field of view (FoV) may be considered. However, according to this scheme, the degree of distortion caused by projection differs with a tile, such that a uniform visual quality may not be guaranteed for a viewport and redundant data may have to be transmitted. Moreover, data is partitioned, compressed, and transmitted for each tile, causing a blocking artifact.

Accordingly, the present disclosure efficiently partitions and transforms a 2D image projected from a 3D image to improve transmission efficiency and reconstruction quality.

Objects of the present disclosure are not limited to the foregoing, and other unmentioned objects would be apparent to one of ordinary skill in the art from the following description.

### [Technical Solution]

The invention is defined by the appended claims. Very roughly speaking, a method for processing a three-dimensional (3D) image according to an example of the present disclosure includes projecting a 3D image into a two-dimensional (2D) image, generating a packed 2D image by packing a plurality of regions that form the 2D image, generating encoded data by encoding the packed 2D image, and transmitting the encoded data.

A transmitter for processing a 3D image according to another example of the present disclosure includes a communication interface and a processor electrically connected with the communication interface, in which the processor is configured to project a 3D image to a 2D image, to generate a packed 2D image by packing a plurality of regions that form the 2D image, to generate encoded data by encoding the packed 2D image, and to transmit the encoded data.

A method for displaying a 3D image, according to another example of the present disclosure, includes receiving encoded data, generating a 2D image packed with a plurality of regions by decoding the encoded data, generating a 2D image projected from a 3D image by unpacking the packed 2D image, and displaying the 3D image based on the projected 2D image.

An apparatus for displaying a 3D image according to another example of the present disclosure includes a communication interface and a processor electrically connected with the communication interface, in which the processor is configured to receive encoded data, to generate a 2D image packed with a plurality of regions by decoding the encoded data, to generate a 2D image projected from a 3D image by unpacking the packed 2D image, and to display the 3D image based on the projected 2D image.

Detailed matters of other examples are included in a detailed description and drawings.

### [Advantageous Effects]

According to the present invention which is defined by the appended claims at least the effects described below may be obtained.

That is, the efficiency of transmission of a 2D image projected from a 3D image may be improved and restoration quality may be enhanced.

### [Brief Description of Drawings]

FIG. 1 illustrates exemplary inverse ERP.
FIG. 2 illustrates exemplary inverse cylindrical projection.
FIG. 3 illustrates exemplary inverse cubic projection.
FIG. 4 shows a system of a transmitter according to an embodiment of the present disclosure.
FIG. 5 shows a system of a receiver according to an embodiment of the present disclosure.
FIG. 6 shows a method for configuring warping units (WUs) according to an embodiment of the present disclosure.
FIG. 7 shows a method for configuring WUs according to another embodiment of the present disclosure.
FIG. 8 shows methods for warping a WU according to embodiments of the present disclosure.
FIG. 9 shows a method for configuring WUs according to an embodiment of the present disclosure.
FIG. 10 shows a method for re-blending WUs according to an embodiment of the present disclosure.
FIG. 11 is a graph showing a weight value with respect to a sampling rate of a WU according to an embodiment of the disclosure.
FIG. 12 shows a method for mapping a 3D image to a 2D image according to an embodiment of the disclosure.
FIG. 13 shows a mapping relationship between regions of a 3D image and regions of a 2D image in a method for mapping a 3D image to a 2D image in FIG. 12.
FIG. 14 shows a mapping method for regions 1 to 4 in FIG. 13.
FIG. 15 shows a mapping method for regions 5 to 8 in FIG. 13.
FIG. 16 shows a mapping method for regions 9 to 12 in FIG. 13.
FIG. 17 shows a mapping method for regions 13 to 15 in FIG. 13.
FIG. 18 shows a mapping method for regions 17 to 19 in FIG. 17.
FIGs. 19 and 20 show a mapping method for a region 20 in FIG. 13.
FIGs. 21 and 22 show a mapping method for a region 16 in FIG. 13.
FIG. 23 shows a method for mapping a 3D image to a 2D image according to another embodiment of the disclosure.
FIG. 24 shows a method for mapping a 3D image to a 2D image according to another embodiment of the disclosure.
FIG. 25 shows a method for mapping a 3D image to a 2D image according to another embodiment of the disclosure.
FIG. 26 shows a method for mapping a 3D image to a 2D image according to another embodiment of the disclosure.
FIGs. 27 and 28 show a method for mapping a 3D image to a 2D image according to another embodiment of the disclosure.
FIGs. 29 and 30 show a method for mapping a 3D image to a 2D image according to another embodiment of the disclosure.
FIG. 31 shows a patch for transforming a rhombus-shape region into a rectangular or square region according to another embodiment of the present disclosure.
FIG. 32 shows a 2D image according to another embodiment of the disclosure.
FIG. 33 is a block diagram of a transmitter according to an embodiment of the present disclosure.
FIG. 34 is a block diagram of a receiver according to an embodiment of the present disclosure.

### [Mode for Carrying out the Invention]

Advantages and features of the present disclosure and a method for achieving them will be apparent with reference to embodiments described below together with the attached drawings. However, the present disclosure is not limited to the disclosed embodiments, but may be implemented in various manners, and the embodiments are provided to complete the disclosure of the present disclosure and to allow those of ordinary skill in the art to understand the scope of the present disclosure. The scope of the invention is defined by the appended claims.

Although the ordinal terms such as "first", "second", etc., are used to describe various elements, these elements are not limited to these terms. These terms are used to merely distinguish one element from another element.

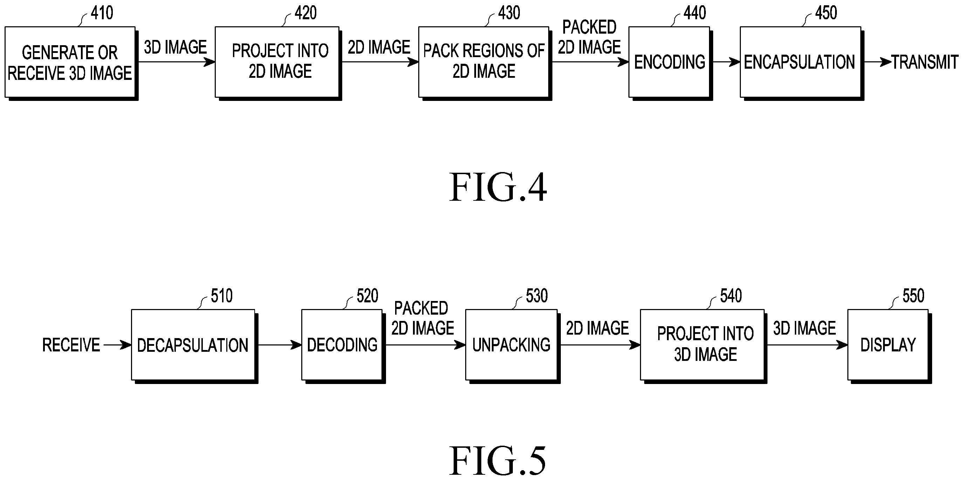

FIG. 4 shows a system of a transmitter according to an embodiment of the present disclosure. The transmitter may be a server for providing data or a service related to a 3D image. Herein, the 3D image may refer to both a dynamic image and a static image. The transmitter may generate or receive a 3D image in operation 410. The transmitter may generate the 3D image by stitching images captured in several directions from multiple cameras. The transmitter may receive data regarding an already generated 3D image from an external source.

The transmitter may project the 3D image to a 2D image in operation 420. In order to project the 3D image into the 2D image, any one of, but not limited to, ERP, cylindrical projection, cubic projection, and various projection methods to be described later herein may be used.

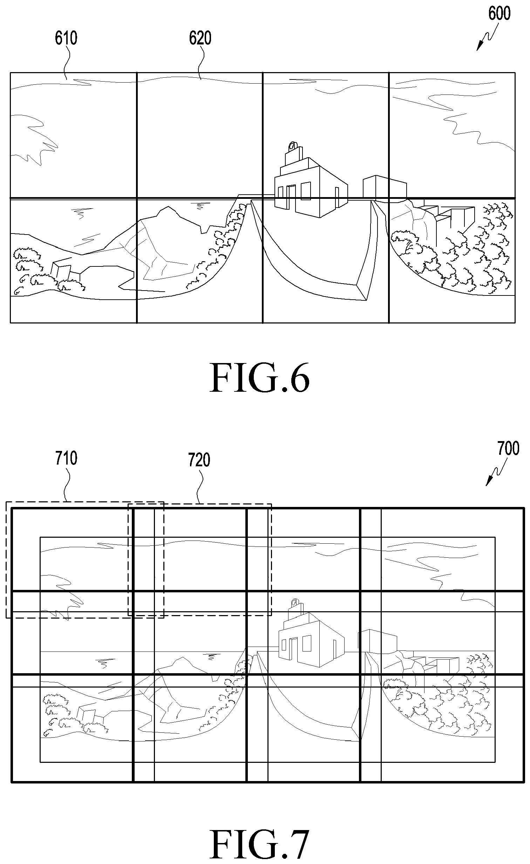

The transmitter may pack regions of the projected 2D image in operation 430. Herein, packing may include partitioning the 2D image into multiple regions referred to as WUs, deforming the WUs, and/or reconfiguring (or rearranging) the WUs, and may also refer to generating the packed 2D image. The WUs indicate regions forming the 2D image and may be replaced with other similar terms such as simply, regions, zones, partitions, etc. With reference to FIGs. 6 and 7, a detailed description will be made of a method for configuring a WU.

FIG. 6 shows a method for configuring WUs according to an embodiment of the present disclosure. In FIG. 6, a 2D image 600 may be divided into multiple WUs 610 and 620. The multiple WUs 610 and 620 may be configured so that they avoid overlapping each other.

FIG. 7 shows a method for configuring WUs according to another embodiment of the present disclosure. In FIG. 7, a 2D image 700 may be divided into multiple WUs 710 and 720. Each of the multiple WUs 710 and 720 may be configured to overlap at least one adjacent other WU. According to several embodiments, some of WUs overlap other WUs and some of the other WUs may not overlap other WUs. When WUs overlap each other, an image corresponding to an overlapping region exists overlappingly in each WU. Through such overlapping, the receiver blends an overlapping region in the WUs, thereby reducing the blocking artifact. Since each of the overlapping WUs may provide a wider FoV than a non-overlapping WU, information corresponding to a particular viewport may be transmitted by transmitting a small number of WUs corresponding to the viewport.

Referring back to FIG. 4, warping the WUs may include warping each WU (e.g., transformation from a rectangle into a triangle, a trapezoid, etc.) and rotating and/or mirroring at least some of the WUs.

Reconfiguring (or rearranging) WUs may include rotating, mirroring, and/or shifting at least some of multiple WUs. According to some embodiments, WUs may be reconfigured to minimize a padding region, but the present disclosure is not limited thereto. Herein, the padding region may mean an additional region on the packed 2D image, except for regions corresponding to the 3D image.

The transmitter may encode the packed 2D image in operation 440. Encoding may be performed using an existing known 2D image encoding scheme. Encoding may be performed independently with respect to each WU. According to several embodiments, encoding may be performed with respect to one image that is formed by grouping the warped WUs.

The transmitter may encapsulate encoded data in operation 450. Encapsulation may mean processing the encoded data to comply with a determined transport protocol through processing such as partitioning the encoded data, adding a header to the partitions, etc. The transmitter may transmit the encapsulated data. Encapsulation may be performed with respect to each WU. According to several embodiments, encapsulation may be performed with respect to one image that is formed by grouping the warped WUs.

FIG. 5 shows a system of a receiver according to an embodiment of the present disclosure. The receiver may receive data regarding a 3D image transmitted from the transmitter. The receiver may decapsulate the received data in operation 510. Through decapsulation in operation 510, encoded data generated through encoding in operation 440 of FIG. 4 may be generated.

In operation 520, the receiver may decode the data decapsulated in operation 510. The packed 2D image may be reconstructed through decoding in operation 520.

The receiver may unpack the decoded data (i.e., the packed 2D image) in operation 530. Through unpacking, the 2D image generated through projection in operation 420 of FIG. 4 may be reconstructed. Unpacking may include inverse warping of reconfiguration and warping the WUs, and/or partitioning the 2D image into the WUs, which are performed during packing in operation 430 of FIG. 4. To this end, the receiver needs to be aware of the packing method in operation 430. The packing method in operation 430 may be previously determined between the transmitter and the receiver. According to several embodiments, the transmitter may deliver information about the packing method in operation 430 to the receiver through a separate message such as metadata. According to several embodiments, transmission data generated through encapsulation in operation 450 may include information about the packing method in operation 430 for example, inside a header. Unpacking in operation 530 may be performed independently for each WU. When WUs are configured to overlap each other as in FIG. 7, the receiver may perform smoothing by blending overlapping regions and stitch images of adjacent WUs, thus generating a 2D image.

The receiver may project the unpacked 2D image into a 3D image in operation 540. The receiver may use inverse projection to projection used in operation 420 for projecting the 2D image into the 3D image in FIG. 4, but the present disclosure is not limited thereto. The receiver may generate a 3D image by projecting the unpacked 2D image into the 3D image.

The receiver may display at least a part of the 3D image through a display in operation 550. For example, the receiver may extract only data corresponding to a current FoV from the 3D image and perform rendering.

Hereinafter, a method for warping WUs from a projected 2D image will be described in more detail. The partitioned WUs may generally have a quadrilateral or polyhedral shape. The WU may have a different ratio of the degree of distortion to redundant data according to a position in the projected 2D image. Unnecessary data may be reduced through down-sampling in order to effectively compress data, or an image may be transformed depending on the degree of distortion in order to reduce distortion.

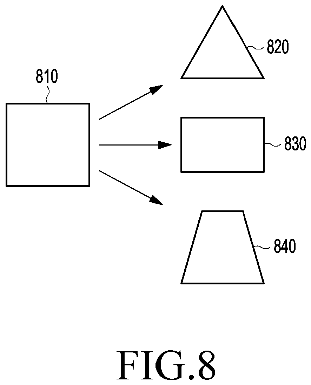

For example, by performing up-sampling or down-sampling through the application of different sampling rates to WU data for a horizontal direction and a vertical direction, the width and height of a WU may be resized. Through warping, a WU may be warped into various shapes, such as a triangle, a trapezoid, a quadrangle, a rhombus, a circle, etc. This will be described in more detail with reference to FIG. 8.

FIG. 8 shows methods for transforming a WU according to embodiments of the present disclosure. Referring to FIG. 8, a square WU 810 may be warped into a triangular WU 820, a rectangular WU 830, or a trapezoidal WU 840. In order to generate the triangular WU 820, a sampling rate with respect to the horizontal direction of the square WU 810 may be maintained constant, and a sampling rate with respect to the vertical direction may be linearly reduced from bottom to top such that the sampling rate is 0 at the top. In order to generate the rectangular WU 830, the sampling rate with respect to the horizontal direction of the square WU 810 may be set higher than that with respect to the vertical direction. In order to generate the trapezoidal WU 840, a sampling rate with respect to the horizontal direction of the square WU 810 may be maintained constant, and the sampling rate with respect to the vertical direction may be linearly reduced from bottom to top such that the sampling rate is greater than 0 at the top.

As described before, WUs may be warped into various shapes, but the shape into which the WUs are to be warped and the sampling rate to be applied may be determined by considering one or more of a choice of content manufacturer, xy coordinates in a WU, the position of a WU in the entire image, characteristics of the content, complexity of the content, and a region of interest (ROI) of the content. A sampling method and an interpolation method may be determined for each WU. For example, different anti-aliasing filters and interpolation filters may be determined for each WU, and different vertical sampling rates and horizontal sampling rates may be determined for each WU. In interpolation, a different interpolation method may be selected for each WU from among various interpolation methods such as nearest neighbor, linear, B-spline, etc. In addition, the sampling rate may be adjusted according to latitude and longitude coordinates in a WU.

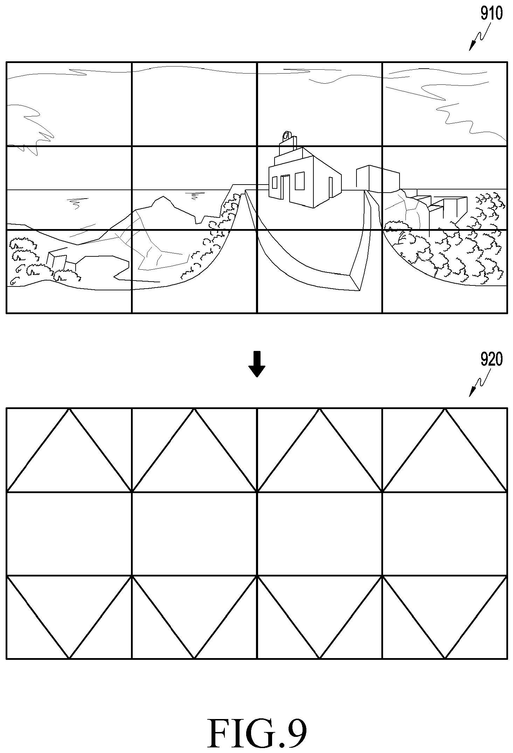

FIG. 9 shows a method for configuring WUs according to an embodiment of the present disclosure. Referring to FIG. 9, a 2D image 910 may be divided into multiple WUs to which different warping schemes may be applied, thus generating a transformed 2D image 920. More specifically, WUs close to a North Pole region (i.e., an upper end of the 2D image 910) may be sampled in the shape of regular triangles. WUs close to a South Pole region (i.e., a lower end of the 2D image 910) may be sampled in the shape of inverted triangles. WUs close to an equator region (i.e., a central region of the 2D image 910 in a vertical direction) may be sampled in the shape of quadrangles. When such a mapping scheme is used, a patch shape for mapping may be determined for each WU, and in WU-based transmission, rendering may be performed in the unit of a sampled patch shape.

Sampling schemes may include a regular sampling scheme and an irregular sampling scheme. The regular sampling scheme performs sampling at the same rate in a line having the same X coordinates (or Y coordinates) in a WU. WUs sampled by the regular sampling scheme may be rendered into a spherical 3D image only after a receiver reconstructs the WUs into a 2D image in an ERP form through inverse warping. For example, even when an ERP image is partitioned into eight WUs, which then are warped into a regular triangle, respectively, in order to form the same geometrical shape as an octahedron, regularly sampled WUs need to be rendered only after being inversely warped into the ERP form. For irregular sampling, when sampling is performed in the unit of rotation of an angle on the surface of the geometry for each line, rendering may be directly performed in the geometry without inverse warping. In this case, however, the complexity of calculation may increase.

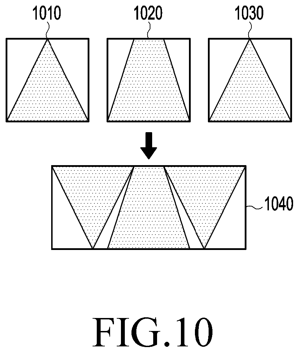

The WUs may have different shapes. When the WU does not have a quadrangular shape, padding with respect to neighboring blank regions may be needed. Data regarding the WUs may be independently compressed and transmitted, but according to several embodiments, the WUs may be grouped and repacked into one image in order to reduce the size of a blank region. The WUs to be grouped may correspond to the current FoV without being limited thereto. This will be described in more detail with reference to FIG. 10. FIG. 10 shows a method for re-blending WUs according to an embodiment of the present disclosure. As shown in FIG. 10, one image 1040 may be generated by grouping and blending three WUs 1010, 1020, and 1030. In order to reduce a blank region of the generated image 1040, the WUs 1010, 1020, and 1030 may be blended after rotating the triangular WUs 1010 and 1030 by 180 degrees, respectively. FIG. 10 is merely an example, and various warping methods (e.g., rotation, mirroring, shifting, etc.) may be applied to WUs in order to reduce the blank region of the image that results from blending. The image that results from grouping may be compressed and transmitted as one image 1040.

The receiver may extract an image of an independent WU by performing inverse warping with respect to the grouping and blending of the WUs described with reference to FIG. 10. For the extracted WU, by performing stitching and blending after performing inverse warping to warping performed with respect to an individual WU, a 3D image may be rendered.

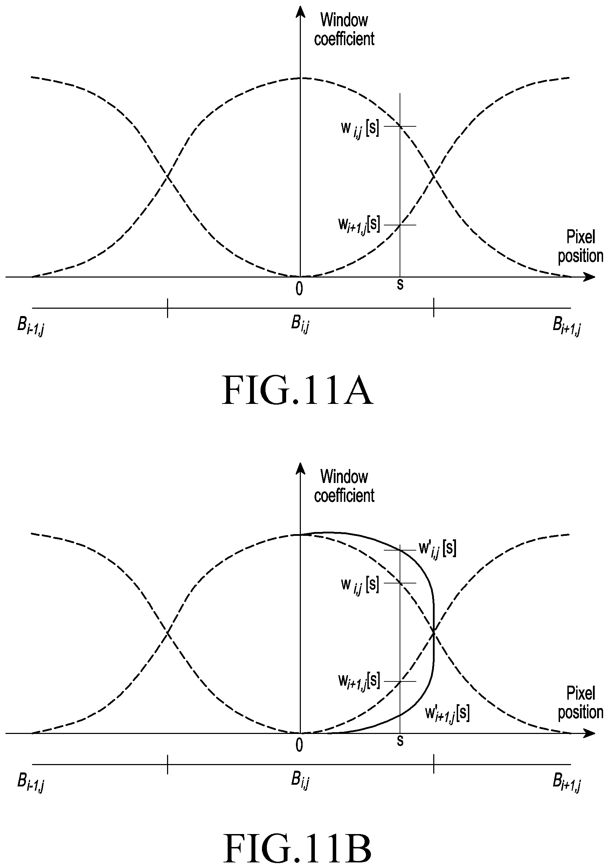

When the WUs overlap each other, the receiver may perform blending using a weighted sum in order to render a 3D image. A weight value applied to blending using the weighted sum may be determined based on the position of a pixel in the image. For example, the weight value may have a smaller value in a direction away from a central point of each WU. The weight value of this type is illustrated in FIG. 11A, as an example. FIG. 11 is a graph showing a weight value with respect to a sampling rate of a WU according to an embodiment of the disclosure. In FIG. 11, w_{i,j}[s] indicates a weight value to be applied to a pixel located at a distance of s from the center of WU_{i,j}. The window coefficient written in FIG. 11 may be interpreted as meaning the same as the weight value. According to several embodiments, the weight value may be content-adaptively adjusted as will be described using an example shown in FIG. 11B. In FIG. 11B, the weight value of w_{i,j}[s] may be adjusted to w'_{i,j}[s] depending on the content.

According to several embodiments, the receiver may select one of the data regarding overlapping images, instead of performing blending using a weighted sum, to render a 3D image.

Hereinafter, a description will be made of methods for mapping a 3D image to a 2D image according to the present disclosure.

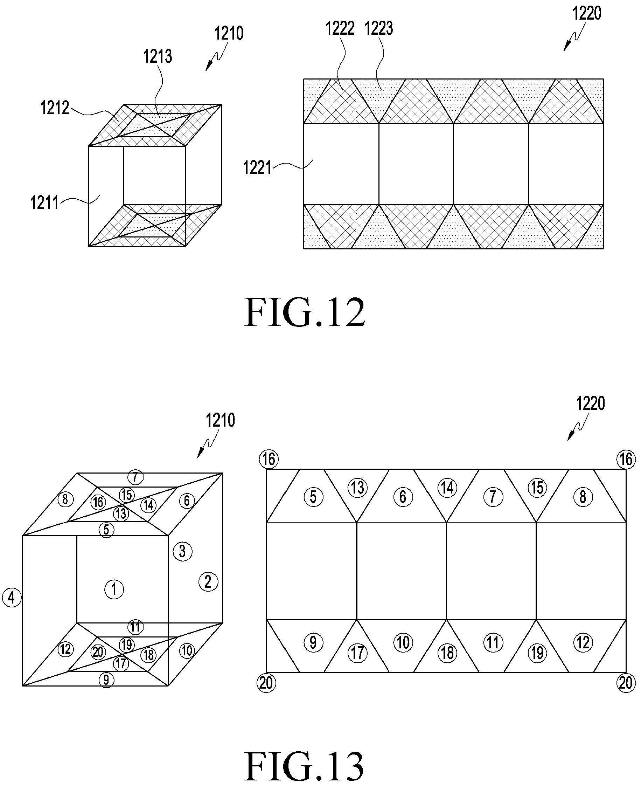

FIG. 12 shows a method for mapping a 3D image to a 2D image according to an embodiment of the present disclosure. In the embodiment of FIG. 12, a 3D image 1210 may be rendered into a cubic shape. The 3D image 1210 may be mapped to a 2D image 1220. Side surfaces 1211 of the 3D image 1210 in a cubic shape may be mapped to central regions 1221 of the 2D image 1220. The top face of the 3D image 1210 may be divided into eight regions by diagonal lines of the top face and sides of a square that has the same center as that of the top face and has a smaller size than that of the top face. The eight regions may include trapezoidal regions 1212 and regular triangular regions 1213. The trapezoidal region 1212 may be mapped to a corresponding trapezoidal region 1222 in the 2D image 1220. The regular triangular region 1213 may be inverted (upside down) or rotated 180 degrees and then inserted between trapezoidal regions 1222 in the 2D image 1220, such that the 2D image 1220 may have a rectangular shape. The same type of mapping applied to the top face is applicable to a bottom face. In order to reduce the discontinuity of the image, low-pass filtering may be applied to regions 1222 and 1223 of the 2D image 1220 corresponding to the top face and the bottom face of the 3D image 1210. A detailed mapping relationship between each region of the 3D image 1210 and each region of the 2D image 1220 is shown in FIG. 13. FIG. 13 shows a mapping relationship between regions of a 3D image and regions of a 2D image in a method for mapping a 3D image to a 2D image in FIG. 12. In FIG. 13, a region in the 3D image 1210 and a region in the 2D image 1220 correspond to each other when the regions have the same index.

A message for specifying a mapping method in FIGs. 12 and 13 may be expressed as below, for example.

```
  if(geometry_type != sphere) {
  unsigned int(8) num_of_regions;
  for(i=0; i < num_of_regions ; i++){
  unsigned int(1 6) region_top_left_x;
  unsigned int(16) region_top_left_y;
  unsigned int(16) region_width;
  unsigned int(16) region_height;
  if(geometry_type == carousel_cube) {
  unsigned int(16) carousel_cube_surface_id;
  unsigned int(16) orientation_of_surface;
  unsigned int(16) area top_left_x;
  unsigned int(16) area_top_left_y;
  unsigned int(16) area width;
  unsigned int(16) area_height;
  }
  }
  }
```

In this message, the meanings of the fields are as below.
geometry_type: geometry for the rendering of omnidirectional media (i.e., a 3D image). This field may also indicate a sphere, a cylinder, a cube, etc., apart from carousel_cube (i.e., geometry in FIGs. 12 and 13).
num_of_regions: the number of regions to divide the image in a referenced track. The image in the referenced track may be divided into as many non-overlapping regions as given by a value of this field, and each region may be separately mapped to a specific surface and areas of the geometry.
region_top_left_x and region_top_left_y: the horizontal and vertical coordinates of the top-left corner of a partitioned region of the image in the referenced track, respectively.
region width and region height: the width and height of the partitioned region of the image in the referenced track, respectively.
carousel_surface_id: the identifier of the surfaces of the carousel cube to which the partitioned region is to be mapped as defined in FIG. 13 as an example.
orientation _of surface: the orientation of a surface shape as shown in FIG. 13 as an example.
area_top_left_x and area_top_left_y: the horizontal and vertical coordinates of the top-left corner of a specific region on the geometry surface, respectively.
area width and area_height: the width and height of the specific region on the geometry surface, respectively.

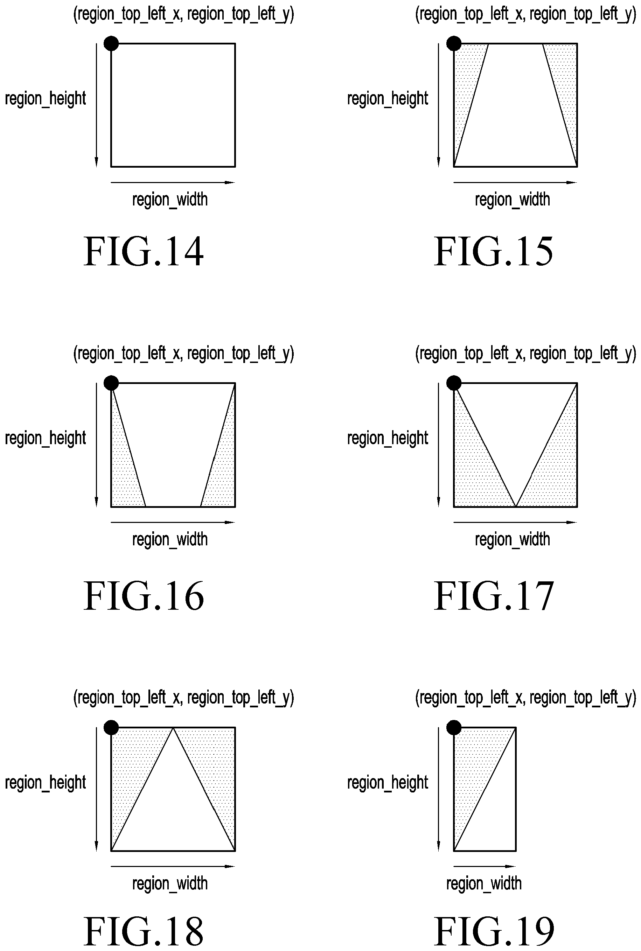

FIG. 14 shows a mapping method for regions 1 to 4 in FIG. 13. Referring to FIG. 14, for regions having surface ID values of 1 to 4 in FIG. 13, orientation_of_surface may be set to 0 (i.e., no orientation). The size and location of each square may be defined by values of region_top_left_x, region_top_left_y, region_width, and region_height.

FIG. 15 shows a mapping method for regions 5 to 8 in FIG. 13. Referring to FIG. 15, for regions having surface ID values of 5 to 8, orientation_of_surface may be set to 1 (i.e., upright orientation). The size and location of each square may be defined by values of region_top_left_x, region_top_left_y, region_width, and region height.

FIG. 16 shows a mapping method for regions 9 to 12 in FIG. 17. Referring to FIG. 16, for regions having surface ID values of 9 to 12, orientation_of_surface may be set to 2 (i.e., upside down orientation). The size and location of each square may be defined by values of region_top_left_x, region top_left_y, region_width, and region height.

FIG. 17 shows a mapping method for regions 13 to 15 in FIG. 17. Referring to FIG. 17, for regions having surface ID values of 13 to 15, orientation_of_surface may be set to 2 (i.e., upside down orientation). The size and location of each square may be defined by values of region_top_left_x, region top_left_y, region_width, and region height.

FIG. 18 shows a mapping method for regions 17 to 19 in FIG. 17. Referring to FIG. 17, for regions having surface ID values of 17 to 19, orientation_of_surface may be set to 1 (i.e., upright orientation). The size and location of each square may be defined by values of region_top_left_x, region top_left_y, region_width, and region height.

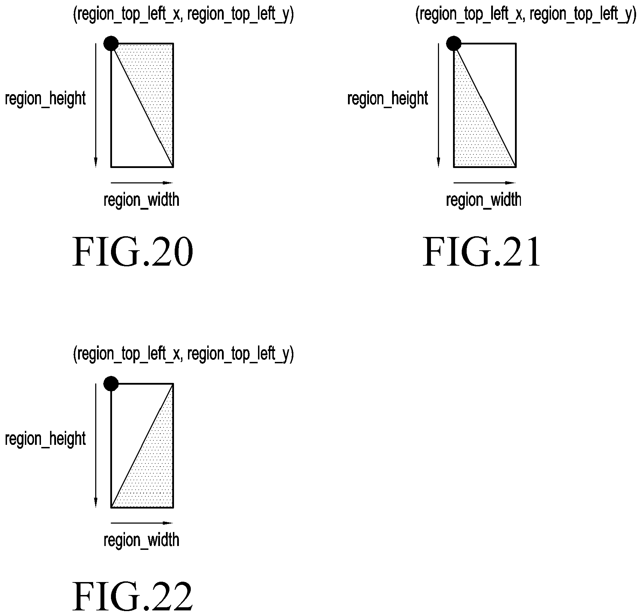

FIGs. 19 and 20 show a mapping method for a region 20 in FIG. 13. Referring to FIGs. 19 and 20, for regions having a surface ID value of 20, values of orientation_of_surface may be set to 5 (upright right half orientation in FIG. 19) and 6 (upright left half orientation in FIG. 20), respectively. The size and location of each square may be defined by values of region_top_left_x, region top_left_y, region_width, and region height.

FIGs. 21 and 22 show a mapping method for a region 16 in FIG. 13. Referring to FIGs. 21 and 22, for regions having a surface ID value of 16, values of orientation_of_surface may be set to 7 (upside down right half orientation in FIG. 21) and 8 (upside down left half orientation in FIG. 22), respectively.

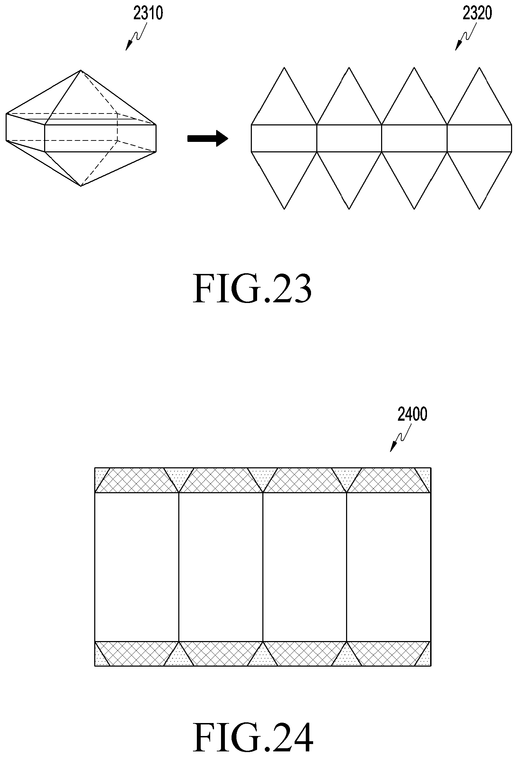

FIG. 23 shows a method for mapping a 3D image to a 2D image according to another embodiment of the present disclosure. In FIG. 23, a 3D image 2310 in the shape of a square pillar may be rendered, which has an upper portion and a lower portion in the shape of quadrangular pyramids. Such a 3D image 2310 may be mapped to a 2D image 2320 like a planar figure of the 3D image 2310. In order to render the 2D image 2320 into a rectangular shape, a padding region may be added. In several embodiments, in order to form a rectangular 2D image from the 2D image 2310, the mapping scheme applied to the top face and the bottom face of the cubic 3D image 1210 in FIGs. 12 and 13 may be used. In this way, a 2D image 2400 as shown in FIG. 24 may be generated.

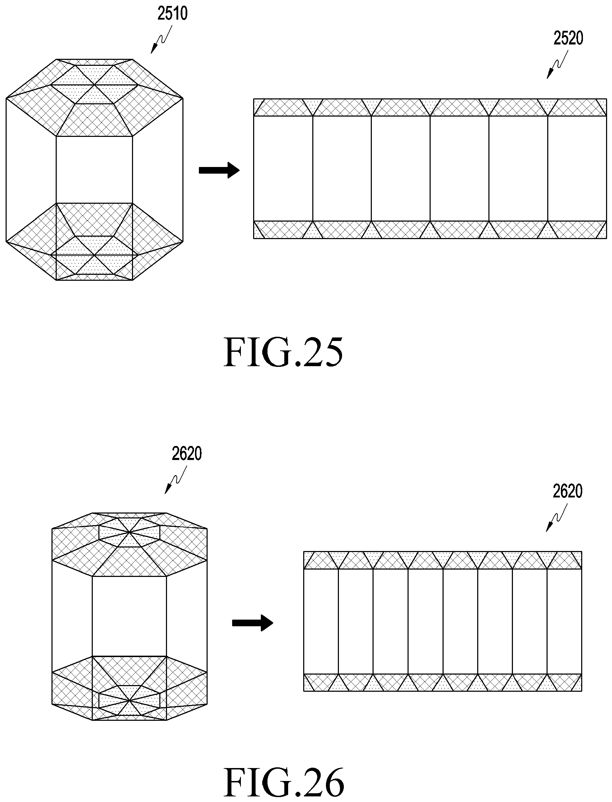

FIG. 25 shows a method for mapping a 3D image to a 2D image according to another embodiment of the disclosure. A 3D image 2510 rendered into a hexagonal shape may be mapped to a 2D image 2520 in a manner similar to the manner in which the 3D image 2310 is mapped to the 2D image 2400 in FIGs. 23 and 24.

FIG. 26 shows a method for mapping a 3D image to a 2D image according to another embodiment of the disclosure. A 3D image 2610 rendered into the shape of an octagonal prism may be mapped to a 2D image 2620 in the manner similar to the manner in which the 3D image 2310 is mapped to the 2D image 2400 in FIGs. 23 and 24.

Although not shown in the drawings, when sixteen horizontal cameras are arranged and one camera exists in each of a top side and a bottom side as in Project Beyond, a 3D image rendered in the geometric shape of a hexadecagonal prism may be configured. The 3D image in the shape of a hexadecagonal prism may be mapped to a 2D image in a manner that is similar to the manner described with reference to FIGs. 23 to 26.

A message indicating such a mapping scheme may be configured as below.

```
  unsigned int(16) center_pitch_offset;
  unsigned int(16) center_yaw_offset;
  unsigned int(8) num_of_regions;
  for(i=0; i < num_of_regions ; i++){
  unsigned int(16) region_id;
  unsigned int(16) region_top _left_x;
  unsigned int(16) region_top_left_y;
  unsigned int(16) region_width;
  unsigned int(16) region_height;
  if(geometry_type == carousel) {
  unsigned int(8) surface_id;
  unsigned int(1) shape_of_surface;
  if {shape_ofsurface == 1) {
  unsigned int(1) orientation_of_triangle;
  }
  unsigned int(16) area_top_left_x;
  unsigned int(16) area_top_left_y;
  unsigned int(16) area_width;
  unsigned int(16) area_height;
  }
  }
```

In this message, the meanings of the fields are as below.
center_pitch_offset and center_yaw_offset: offset values of pitch and yaw angles of coordinates of a point to which the center pixel of an image is rendered.
num_of_regions: the number of regions to divide the image in a referenced track.
region_top_left_x and region_top_left_y: the horizontal and vertical coordinates of the top-left corner of a partitioned region of the image in the referenced track, respectively.
region_width and region height: the width and height of the partitioned region of the image in the referenced track, respectively.
surface_id: an identifier for the surfaces of the geometry.
shape_of_surface: an enumerator that indicates the shape of the surface of the geometry. For shape_of surface of 0, the shape of the surface of the geometry may be a rectangle. For shape_of surface of 1, the shape of the surface of the geometry may be a triangle.
area_top_left_x and area_top_left_y: the horizontal and vertical coordinates of the top-left corner of a specific region on the geometry surface, respectively.
area_width and area_height: the width and height of the specific region on the geometry surface, respectively.
orientation_of_triangle: an enumerator that indicates the orientation of a triangle. For orientation _of triangle of 0, the triangle may be expressed as described with reference to FIG. 18. For orientation_of triangle of 1, the triangle may be expressed as described with reference to FIG. 19.

In defining geometry mapping like carousel_cylinder, a planar image in a referenced track may be mapped according to the syntax represented below:

```
  if(geometry_type != sphere) {
  unsigned int(8) num_of_regions;
  for(i=0; i < num_of_regions ; i++){
  unsigned int(16) region_top_left_x;
  unsigned int(16) region_top_left_y;
  unsigned int(16) region_width;
  unsigned int(16) region_height;
  if(geometry_type == carousel_cylinder) {
  unsigned int(16) carousel_cylinder_surface_id;
  unsigned int(16) orientation_of_surface;
  unsigned int(16) area top_left_x;
  unsigned int(16) area_top_left_y;
  unsigned int(16) area_width;
  unsigned int(16) area_height;
  }
  }
  }
```

In this syntax, the meanings of the fields are represented as below:
geometry_type: geometry for the rendering of omnidirectional media (i.e., a 3D image). This field may also indicate a sphere, a cylinder, a cube, etc., apart from carousel_cylinder (i.e., geometry in FIGs. 23 through 26).
num of regions: the number of regions to divide the image in a referenced track. The image in the referenced track may be divided into as many non-overlapping regions as given by a value of this field, and each region may be separately mapped to a specific surface and areas of the geometry.
region_top_left_x and region_top_left_y: the horizontal and vertical coordinates of the top-left corner of a partitioned region of the image in the referenced track, respectively.
region width and region height: the width and height of the partitioned region of the image in the referenced track, respectively.
carousel_surface_id: an identifier of surfaces of the carousel cylinder to which the partitioned region is to be mapped. Surface IDs may be defined similarly to that of carousel_cube as described previously.
orientation_of surface: the orientation of a surface shape as defined in association with carousel_cube previously.
area_top_left_x and area_top_left_y: the horizontal and vertical coordinates of the top-left corner of a specific region on the geometry surface, respectively.
area_width and area_height: the width and height of the specific region on the geometry surface, respectively.

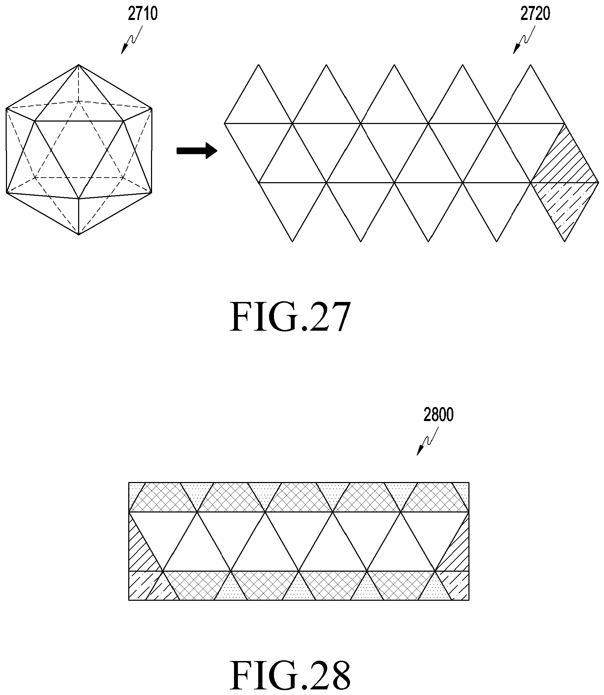

FIGs. 27 and 28 show a method for mapping a 3D image to a 2D image according to another embodiment of the disclosure. A 3D image may be rendered into a regular polyhedral shape. For example, like the 3D image 2710 shown in FIG. 27, the 3D image may be rendered into a regular icosahedral shape. In other examples, the 3D image may be rendered into a regular tetrahedron, a regular hexahedron, a regular octahedron, or a regular dodecahedron. The 3D image 2710 may be projected to a 2D image 2720 like a planar figure of a regular icosahedron. In several embodiments, a padding region may be added to the 2D image 2720 to form a rectangular 2D image. In several embodiments, a rectangular 2D image 2800 as shown in FIG. 28 may be formed by partitioning, rotating, and rearranging upper triangles and lower triangles of the 2D image 2720 shown in FIG. 27. Such partitioning and rearrangement of the triangles may be performed in substantially the same manner as described in the embodiment shown in FIGs. 12 and 13.

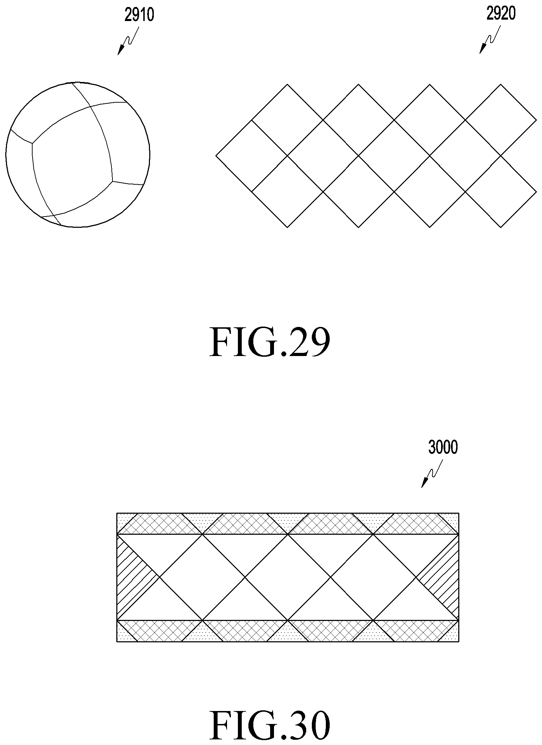

According to several embodiments, a 3D image rendered into a rhombic polyhedron may also be mapped to a 2D image similarly to the above-described embodiments. FIGs. 29 and 30 show a method for mapping a 3D image to a 2D image according to another embodiment of the disclosure. As shown in FIG. 29, a 3D image 2910 rendered into a rhombic dodecahedron may be projected to a 2D image 2920 like a planar figure. In several embodiments, a padding region may be added to the 2D image 2920 to form a rectangular 2D image. In several embodiments, a rectangular 2D image 3000 as shown in FIG. 30 may be formed by partitioning, rotating, and rearranging upper triangles and lower triangles of the 2D image 2920 shown in FIG. 29. Such partitioning and rearrangement of the triangles may be performed in substantially the same manner as described in the embodiment shown in FIGs. 12 and 13.

According to several embodiments, each of the regions in the shape of rhombuses (i.e., WUs) of the 2D image 2920 shown in FIG. 29 may be transformed into a rectangle or a square. To transform the regions of the 2D region into a rectangular or square region. A patched region 3100 may include a first region 3110 and a second region 3120. The first region 3110 may correspond to each region of the 2D image 2920. The second region 3120 may include additional data for rendering the shape of the patched region 3100 into the rectangular shape or the square shape.

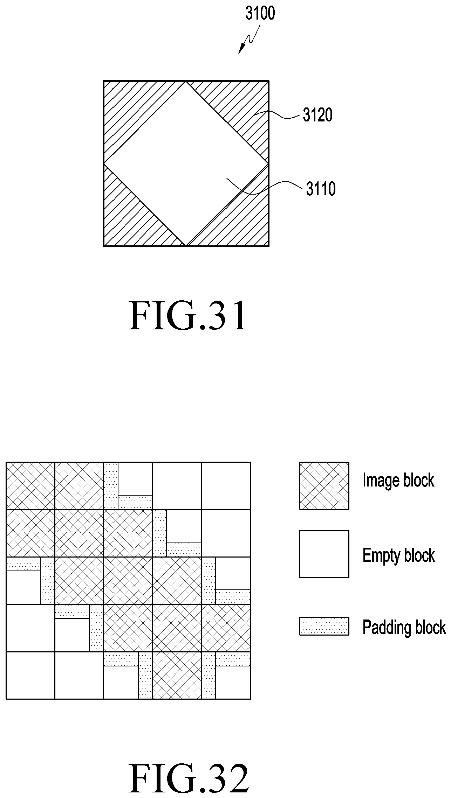

According to several embodiments, after the patch shown in FIG. 31 is applied to the regions of the 2D image 2920 shown in FIG. 29, the patched regions may be arranged on a plane as shown in FIG. 32. FIG. 32 shows a 2D image according to another embodiment of the disclosure. In FIG. 32, a corresponding image does not exist in an empty block (i.e., an empty region). In this case, the value of skip_block_flag for the block may be set to avoid decoding the block. When the value of skip block flag for the empty block is set to 1, the block may be decoded, but a value of a reconstructed image may be invalid.

When mapping is performed by partitioning a region into squares as shown in FIG. 32, the blocking artifact may occur in a boundary region between the squares, and motion estimation (ME) and motion compensation (MC) may not be efficiently performed when there is no data near an image block (that is, there is an empty block near the image block). For efficient ME and MC, according to the present invention as defined by the appended claims a padding block is added. The padding block is arranged near an image block. The padding block may not include data of a real image. Thus, the padding block is not rendered in the receiver. The padding block may be filled with data that copies the nearest image value of a spatially adjacent region or data in which a weighted sum is applied to values of images of the adjacent region. According to several embodiments, through copying and filling using adjacent image data continuous in each geometry, data of the padding block may be formed. The padding block is not rendered to reproduce a 3D image in the receiver, but is used to improve the quality of rendering of a region (i.e., a region corresponding to an image block). Although a padding region has been described in an embodiment associated with a rhombic polyhedron, it could be easily understood that the padding region is applicable to improve rendering quality when an empty region exists in a 2D image.

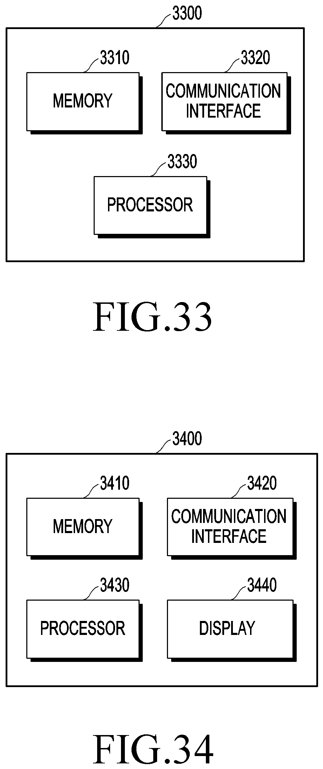

FIG. 33 is a block diagram of another transmitter according to an embodiment of the present disclosure. FIG. 11 is a block diagram of a transmitter according to an embodiment of the present disclosure. The transmitter 3300 may also be referred to as a server. The transmitter 3300 may include a memory 3310, a communication interface 3320, and a processor 3330. The transmitter 3300 may be configured to perform operations of the transmitter 3300 (i.e., operations associated with mapping of a 3D image to a 2D image, etc.) described in the previous embodiments. The processor 3330 may be connected to the memory 3310 and the communication interface 3320 in such a way to communicate with the memory 3310 and the communication interface 3320 and electrically. The transmitter 3300 may transmit and receive data through the communication interface 3320. The memory 3310 stores information for the operations of the transmitter 3300. Instructions or codes for controlling the processor 3330 may be stored in the memory 3310. In addition, transitory or non-transitory data required for calculation of the processor 3330 may be stored in the memory 3310. The processor 3330 may be a processor, and according to several embodiments, may mean a set of a plurality of processors classified depending on functions. The processor 3330 may be configured to control the operations of the transmitter 3300. The above-described operations of the transmitter 3300 may be substantially processed and executed by the processor 3330. Although transmission and reception of data are performed through the communication interface 3320 and storage of data and instructions is performed by the memory 3310, the operations of the communication interface 3320 and the memory 3310 may be controlled by the processor 3330, such that the transmission and reception of the data and the storage of the instructions may be regarded as being performed by the processor 3330.

FIG. 34 is a block diagram of a receiver according to an embodiment of the present disclosure. A receiver 3400 may be a VR device such as an HMD device. The receiver 3400 may receive data regarding a 3D image (data regarding a two-dimensionally projected image) and display the 3D image. The receiver 3400 may include a memory 3410, a communication interface 3420, a processor 3430, and a display 3440. The description of the memory 3410, the communication interface 3420, and the processor 3430 is the same as that of the processor 3310, the communication interface 3320, and the processor 3330 of the transmitter 3300. The display 3440 may reproduce at least a partial region of the 3D image. An operation of the display 3440 may also be controlled by the processor 3430.

While embodiments of the present disclosure have been described with reference to the attached drawings, those of ordinary skill in the art to which the present disclosure pertains will appreciate that the aforementioned embodiments should be construed as being only illustrative for the invention which is defined by the appended claims.

## Claims

1. A processor-implemented method for processing an omnidirectional image, the method comprising:
projecting (420) an omnidirectional image into a two-dimensional, 2D, image;
generating (430) a packed 2D image from the 2D image by packing a plurality of regions that form the 2D image, wherein packing the plurality of regions comprises performing at least one of transforming, resizing and relocating at least one of the plurality of regions;
generating (440) encoded data by encoding the packed 2D image; and
transmitting (450) the encoded data,
wherein the packed 2D image comprises a plurality of packed regions which correspond to the plurality of regions of the 2D image, respectively, and at least one additional padding region which is not rendered at the receiver side but is added instead of an empty region to at least one boundary of at least one packed region of the plurality of packed regions to improve rendering at the receiver side regarding blocking artifacts, when generating the packed 2D image by packing the plurality of regions, and
wherein data of each of the at least one additional padding region is determined based on a value of one or more packed region adjacent to the corresponding additional padding region

2. The method of claim 1, wherein the plurality of regions do not overlap one another.

3. The method of claim 1, wherein at least one of the plurality of regions is rotated for packing the plurality of regions.

4. The method of claim 1, wherein a length of one or more sides of at least one of the plurality of regions is changed for packing the plurality of regions.

5. The method of claim 1, wherein different sampling rates are applied to a horizontal axis and a vertical axis of at least one of the plurality of regions for packing the plurality of regions.

6. A processor-implemented method for displaying an omnidirectional image, the method comprising:
receiving encoded data;
generating (520) a packed two-dimensional, 2D, image which is packed with a plurality of regions of a 2D image which is projected from an omnidirectional image, by decoding the encoded data, wherein the packed 2D image is generated by packing the plurality of regions of the 2D image and packing the plurality of regions comprises performing at least one of transforming, resizing and relocating at least one of the plurality of regions;
generating (530) the 2D image from the packed 2D image by unpacking the packed 2D image; and
displaying (540, 550) the omnidirectional image based on the projected 2D image,
wherein the packed 2D image comprises a plurality of packed regions which correspond to the plurality of regions of the 2D image, respectively, and at least one additional padding region which is not displayed but is added instead of an empty region to at least one boundary of at least one packed region of the plurality of packed regions to improve displaying regarding blocking artifacts, when generating the packed 2D image by packing the plurality of regions, and
wherein data of each of the at least one additional padding region is determined based on a value of one or more packed region adjacent to the corresponding additional padding region

7. The method of claim 6, wherein the plurality of regions do not overlap one another.

8. The method of claim 6, wherein at least one of the plurality of regions is rotated for packing the plurality of regions.

9. The method of claim 6, wherein a length of one or more sides of at least one of the plurality of regions is changed for packing the plurality of regions.

10. The method of claim 6, wherein different sampling rates are applied to a horizontal axis and a vertical axis of at least one of the plurality of regions for packing the plurality of regions.

11. A transmitter for processing an omnidirectional image, the transmitter comprising:
a communication interface; and
a processor electrically connected with the communication interface,
wherein the processor is configured to perform the method of any one of claims 1 to 5.

12. An apparatus for displaying an omnidirectional image, the apparatus comprising:
a communication interface; and
a processor electrically connected with the communication interface,
wherein the processor is configured to perform the method of any one of claims 6 to 10.

## Patentansprüche

1. Prozessorimplementiertes Verfahren zum Verarbeiten eines omnidirektionalen Bildes, wobei das Verfahren Folgendes umfasst:
Projizieren (420) eines omnidirektionalen Bildes in ein zweidimensionales, 2D, Bild;
Erzeugen (430) eines gepackten 2D-Bildes aus dem 2D-Bild durch Packen einer Vielzahl von Bereichen, die das 2D-Bild bilden, wobei das Packen der Vielzahl von Bereichen das Ausführen eines Transformierens, einer Größenänderung und/oder eines Verschiebens von mindestens einem der Vielzahl von Bereichen umfasst;
Erzeugen (440) codierter Daten durch Codieren des gepackten 2D-Bildes; und
Übertragen (450) der codierten Daten,
wobei das gepackte 2D-Bild eine Vielzahl von gepackten Bereichen umfasst, die jeweils der Vielzahl von Bereichen des 2D-Bildes entsprechen, und mindestens einen zusätzlichen Padding-Bereich, der auf der Empfängerseite nicht gerendert wird, sondern anstatt eines leeren Bereichs zu mindestens einer Grenze von mindestens einem gepackten Bereich der Vielzahl von gepackten Bereichen hinzugefügt wird, um das Rendern auf der Empfängerseite bezüglich der Blockierungsartefakte zu verbessern, wenn das gepackte 2D-Bild durch Packen der Vielzahl von Bereichen erzeugt wird, und
wobei die Daten von jedem des mindestens einen zusätzlichen Padding-Bereichs basierend auf einem Wert eines oder mehrerer gepackter Bereiche neben dem entsprechenden zusätzlichen Padding-Bereich bestimmt werden.

2. Verfahren nach Anspruch 1, wobei die Vielzahl von Bereichen einander nicht überlappen.

3. Verfahren nach Anspruch 1, wobei mindestens einer der Vielzahl von Bereichen zum Packen der Vielzahl von Bereichen gedreht wird.

4. Verfahren nach Anspruch 1, wobei eine Länge einer oder mehrerer Seiten von mindestens einem der Vielzahl von Bereichen zum Packen der Vielzahl von Bereichen geändert wird.

5. Verfahren nach Anspruch 1, wobei verschiedene Abtastraten auf eine horizontale Achse und eine vertikale Achse von mindestens einem der Vielzahl von Bereichen zum Packen der Vielzahl von Bereichen angewendet werden.

6. Prozessorimplementiertes Verfahren zum Anzeigen eines omnidirektionalen Bildes, wobei das Verfahren Folgendes umfasst:
Empfangen codierter Daten;
Erzeugen (520) eines gepackten zweidimensionalen, 2D, Bildes, das mit einer Vielzahl von Bereichen eines 2D-Bildes gepackt ist, das von einem omnidirektionalen Bild projiziert wird, durch Decodieren der codierten Daten, wobei das gepackte 2D-Bild durch Packen der Vielzahl von Bereichen des 2D-Bildes erzeugt wird und das Packen der Vielzahl von Bereichen das Ausführen eines Transformierens, einer Größenänderung und/oder eines Verschiebens von mindestens einem der Vielzahl von Bereichen umfasst;
Erzeugen (530) des 2D-Bildes aus dem gepackten 2D-Bild durch Entpacken des gepackten 2D-Bildes; und
Anzeigen (540, 550) des omnidirektionalen Bildes basierend auf dem projizierten 2D-Bild,
wobei das gepackte 2D-Bild eine Vielzahl von gepackten Bereichen umfasst, die jeweils der Vielzahl von Bereichen des 2D-Bildes entsprechen, und mindestens einen zusätzlichen Padding-Bereich, der nicht angezeigt wird, sondern anstatt eines leeren Bereichs zu mindestens einer Grenze von mindestens einem gepackten Bereich der Vielzahl von gepackten Bereichen hinzugefügt wird, um das Anzeigen bezüglich der Blockierungsartefakte zu verbessern, wenn das gepackte 2D-Bild durch Packen der Vielzahl von Bereichen erzeugt wird, und
wobei die Daten von jedem des mindestens einen zusätzlichen Padding-Bereichs basierend auf einem Wert eines oder mehrerer gepackter Bereiche neben dem entsprechenden zusätzlichen Padding-Bereich bestimmt werden.

7. Verfahren nach Anspruch 6, wobei die Vielzahl von Bereichen einander nicht überlappen.

8. Verfahren nach Anspruch 6, wobei mindestens einer der Vielzahl von Bereichen zum Packen der Vielzahl von Bereichen gedreht wird.

9. Verfahren nach Anspruch 6, wobei eine Länge einer oder mehrerer Seiten von mindestens einem der Vielzahl von Bereichen zum Packen der Vielzahl von Bereichen geändert wird.

10. Verfahren nach Anspruch 6, wobei verschiedene Abtastraten auf eine horizontale Achse und eine vertikale Achse von mindestens einem der Vielzahl von Bereichen zum Packen der Vielzahl von Bereichen angewendet werden.

11. Sender zum Verarbeiten eines omnidirektionalen Bildes, wobei der Sender Folgendes umfasst:
eine Kommunikationsschnittstelle; und
einen Prozessor, der mit der Kommunikationsschnittstelle elektrisch verbunden ist,
wobei der Prozessor konfiguriert ist, um das Verfahren nach einem der Ansprüche 1 bis 5 auszuführen.

12. Vorrichtung zum Anzeigen eines omnidirektionalen Bildes, wobei die Vorrichtung Folgendes umfasst:
eine Kommunikationsschnittstelle; und
einen Prozessor, der mit der Kommunikationsschnittstelle elektrisch verbunden ist,
wobei der Prozessor konfiguriert ist, um das Verfahren nach einem der Ansprüche 6 bis 10 auszuführen.

## Revendications

1. Procédé mis en œuvre par un processeur pour traiter une image omnidirectionnelle, le procédé comprenant :
projeter (420) une image omnidirectionnelle en une image bidimensionnelle, 2D ;
générer (430) une image 2D compactée à partir de l'image 2D en compactant une pluralité de régions qui forment l'image 2D, où le compactage de la pluralité de régions comprend l'exécution d'au moins l'un parmi la transformation, le redimensionnement et la relocalisation d'au moins l'une de la pluralité de régions ;
générer (440) des données codées en codant l'image 2D compactée ; et
transmettre (450) les données codées,
où l'image 2D compactée comprend une pluralité de régions compactées qui correspondent à la pluralité de régions de l'image 2D, respectivement, et au moins une région de remplissage supplémentaire qui n'est pas rendue du côté récepteur mais est ajoutée à la place d'une région vide à au moins une limite d'au moins une région compactée de la pluralité de régions compactées pour améliorer le rendu côté récepteur concernant des artéfacts de blocage, lors de la génération de l'image 2D compactée en compactant la pluralité de régions, et
où les données de chacune de l'au moins une région de remplissage supplémentaire sont déterminées sur la base d'une valeur d'une ou plusieurs régions compactées adjacentes à la région de remplissage supplémentaire correspondante.

2. Procédé selon la revendication 1, où la pluralité de régions ne se chevauchent pas.

3. Procédé selon la revendication 1, où au moins l'une de la pluralité de régions est tournée pour compacter la pluralité de régions.

4. Procédé selon la revendication 1, où une longueur d'un ou plusieurs côtés d'au moins l'une de la pluralité de régions est changée pour compacter la pluralité de régions.

5. Procédé selon la revendication 1, où différents taux d'échantillonnage sont appliqués à un axe horizontal et à un axe vertical d'au moins l'une de la pluralité de régions pour compacter la pluralité de régions.

6. Procédé mis en œuvre par un processeur pour afficher une image omnidirectionnelle, le procédé comprenant :
recevoir des données codées ;
générer (520) une image bidimensionnelle, 2D, compactée qui est compactée avec une pluralité de régions d'une image 2D qui est projetée à partir d'une image omnidirectionnelle, en décodant les données codées, où l'image 2D compactée est générée en compactant la pluralité de régions de l'image 2D compactée et le compactage de la pluralité de régions comprend l'exécution d'au moins l'une parmi la transformation, le redimensionnement et la relocalisation d'au moins l'une de la pluralité de régions ;
générer (530) l'image 2D à partir de l'image 2D compactée en décompactant l'image 2D compactée ; et
afficher (540, 550) l'image omnidirectionnelle sur la base de l'image 2D projetée,
où l'image 2D compactée comprend une pluralité de régions compactées qui correspondent à la pluralité de régions de l'image 2D, respectivement, et au moins une région de remplissage supplémentaire qui n'est pas affichée mais est ajoutée à la place d'une région vide à au moins une limite d'au moins une région compactée de la pluralité de régions compactées, pour améliorer l'affichage concernant des artéfacts de blocage, lors de la génération de l'image 2D compactée en compactant la pluralité de régions, et
où les données de chacune de l'au moins une région de remplissage supplémentaire sont déterminées sur la base d'une valeur d'une ou plusieurs régions compactées adjacentes à la région de remplissage supplémentaire correspondante.

7. Procédé selon la revendication 6, où la pluralité de régions ne se chevauchent pas.

8. Procédé selon la revendication 6, où au moins l'une de la pluralité de régions est tournée pour compacter la pluralité de régions.

9. Procédé selon la revendication 6, où une longueur d'un ou plusieurs côtés d'au moins l'une de la pluralité de régions est changée pour compacter la pluralité de régions.

10. Procédé selon la revendication 6, où différents taux d'échantillonnage sont appliqués à un axe horizontal et à un axe vertical d'au moins l'une de la pluralité de régions pour compacter la pluralité de régions.

11. Émetteur pour le traitement d'une image omnidirectionnelle, l'émetteur comprenant :
une interface de communication ; et
un processeur connecté électriquement à l'interface de communication,
où le processeur est configuré pour mettre en œuvre le procédé selon l'une quelconque des revendications 1 à 5.

12. Appareil pour afficher une image omnidirectionnelle, l'appareil comprenant :
une interface de communication ; et
un processeur connecté électriquement à l'interface de communication,
où le processeur est configuré pour mettre en œuvre le procédé selon l'une quelconque des revendications 6 à 10.
